# EUROPEAN PATENT APPLICATION

(11) **EP 4 383 824 A1**
(43) Date of publication of application: **12.06.2024**
(21) Application number: 21952266.1
(22) Date of filing: 04.08.2021
(51) Int. Cl.: H04W 48/08

(54) **SHARING SESSION ESTABLISHMENT METHOD AND APPARATUS, AND COMMUNICATION DEVICE**

(71) Applicant: Beijing Xiaomi Mobile Software Co., Ltd., Beijing 100085 (CN)
(72) Inventor: LIU, Jianning, Beijing 100085 (CN); SHEN, Yang, Beijing 100085 (CN)
(74) Representative: Gunzelmann, Rainer
(86) International application number: PCT/CN2021/110687
(87) International publication number: WO 2023/010366

(57) **Abstract**

The present disclosure relates to the technical field of wireless communications, and provides a sharing session establishment method and apparatus, and a communication device. The method comprises: a session management function (SMF) receiving a protocol data unit (PDU) session establishment request from a user equipment (UE) by means of an access network device, wherein the PDU session establishment request comprises a multi-modal service identifier; and determining corresponding PDU sessions according to the PDU session establishment request, and binding the PDU sessions to a sharing N4 session corresponding to the multi-modal service identifier, such that a plurality of PDU sessions corresponding to the multi-modal service identifier share the described sharing N4 session. Hence, when a plurality of UEs collaboratively implement a multi-modal service, the sharing of a same sharing N4 session by a plurality of PDU sessions can be implemented; that is, the plurality of UEs can use the same sharing N4 session, so that network resource consumption can be reduced.

## Description

### TECHNICAL FIELD

The present disclosure relates to a field of communication technology, and more particularly, to a method for establishing a shared session, an apparatus for establishing a shared session and a communication device.

### BACKGROUND

At present, a mobile network formulates a related mobility management procedure, a related session management procedure, and other characteristics mainly for a single user equipment (UE). At the same time, in terms of UE management and UE resource allocation, the mobile network also performs related operations for a single UE.

However, with the rapid development of the mobile network, an era of Internet of Everything is coming. Limited by the capability of a single device, a single UE may not be capable of completing the complex tasks and mission. In this case, multiple UEs may be needed to cooperate closely to complete the complex tasks and mission.

However, current standardized protocol can only establish a session for a single UE. Therefore, how to achieve a solution of multiple UEs sharing a session remains a problem to be solved.

### SUMMARY

Embodiments of a first aspect of the disclosure provide a method for establishing a shared session, applied to a session management function (SMF). The method includes: receiving a protocol data unit (PDU) session establishment request from a user equipment (UE) through an access network device, in which the PDU session establishment request includes a multimodal service identifier; determining a corresponding PDU session based on the PDU session establishment request; and binding the PDU session with a shared N4 session corresponding to the multimodal service identifier, so that a plurality of PDU sessions corresponding to the multimodal service identifier share the shared N4 session.

Optionally, binding the PDU session with the shared N4 session corresponding to the multimodal service identifier includes: sending an updated N4 context parameter corresponding to the shared N4 session to a user plane function (UPF); and sending an updated quality of service (QoS) parameter to the UE and the access network device.

Optionally, sending the updated QoS parameter to the UE and the access network device includes: sending updated QoS rules information to the UE; and sending updated QoS profile information to the access network device.

Optionally, determining the corresponding PDU session based on the PDU session establishment request includes: determining whether a PDU session established for the multimodal service identifier exists.

Optionally, the method further includes: if yes, establishing a PDU session corresponding to the UE or joining the PDU session established for the multimodal service identifier.

Optionally, the method further includes: if no, establishing the PDU session, and establishing an N4 session corresponding to the PDU session.

Optionally, the multimodal service identifier comprises one or more of a mission identifier, a shared session identifier and a group identifier.

Optionally, the multimodal service identifier is configured to identify a same multimodal service, or to identify a plurality of UEs sharing a PDU session.

Embodiments of a second aspect of the disclosure provide another method for establishing a shared session, applied to a user equipment (UE). The method includes: sending a protocol data unit (PDU) session establishment request to a session management function (SMF) through an access network device, in which the PDU session establishment request includes a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

Optionally, the method further includes: receiving, through the access network device, updated quality of service (QoS) rules information fed back by the SMF.

Optionally, the multimodal service identifier comprises one or more of a mission identifier, a shared session identifier and a group identifier.

Optionally, the multimodal service identifier is configured to identify a same multimodal service, or to identify a plurality of UEs sharing a PDU session.

Embodiments of a third aspect of the disclosure provide another method for establishing a shared session, applied to an access network device. The method includes: receiving a protocol data unit (PDU) session establishment request from a user equipment (UE), in which the PDU session establishment request includes a multimodal service identifier; and sending the PDU session establishment request to an access and mobility management function (AMF), and sending the PDU session establishment request to a session management function (SMF) through the AMF, in which the SMF binds a PDU session corresponding to the PDU session establishment request with a shared N4 session corresponding to the multimodal service identifier, so that a plurality of PDU sessions corresponding to the multimodal service identifier share the shared N4 session.

Optionally, the method further includes: receiving, through the AMF, updated quality of service (QoS) profile information from the SMF.

Optionally, the method further includes: receiving, through the AMF, updated QoS rules information from the SMF; and sending the updated QoS rules information to the UE.

Optionally, the multimodal service identifier comprises one or more of a mission identifier, a shared session identifier and a group identifier.

Optionally, the multimodal service identifier is configured to identify a same multimodal service, or to identify a plurality of UEs sharing a PDU session.

Embodiments of a fourth aspect of the disclosure provide another method for establishing a shared session, applied to an access and mobility management function (AMF). The method includes: receiving a protocol data unit (PDU) session establishment request from a user equipment (UE) through an access network device, in which the PDU session establishment request includes a multimodal service identifier; determining a target session management function (SMF) based on the multimodal service identifier; and sending the PDU session establishment request to the target SMF.

Optionally, determining the target SMF based on the multimodal service identifier includes: taking an SMF responsible for multimodal services as the target SMF; or taking an SMF to which a plurality of PDU sessions corresponding to the multimodal service identifier belong as the target SMF.

Optionally, the method further includes: receiving updated quality of service (QoS) profile information and updated QoS rules information from the target SMF, and forwarding the QoS profile information and the updated QoS rules information to the access network device.

Optionally, the multimodal service identifier comprises one or more of a mission identifier, a shared session identifier and a group identifier.

Optionally, the multimodal service identifier is configured to identify a same multimodal service, or to identify a plurality of UEs sharing a PDU session.

Embodiments of a fifth aspect of the disclosure provide an apparatus for establishing a shared session, applied to a session management function (SMF). The apparatus includes: a transceiver unit, configured to receive a protocol data unit (PDU) session establishment request from a user equipment (UE) through an access network device, in which the PDU session establishment request includes a multimodal service identifier; a processing unit, configured to determine a corresponding PDU session based on the PDU session establishment request; and to bind the PDU session with a shared N4 session corresponding to the multimodal service identifier, so that a plurality of PDU sessions corresponding to the multimodal service identifier share the shared N4 session.

Embodiments of a sixth aspect of the disclosure provide another apparatus for establishing a shared session, applied to a user equipment (UE). The apparatus includes: a transceiver unit, configured to send a protocol data unit (PDU) session establishment request to a session management function (SMF) through an access network device, in which the PDU session establishment request includes a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

Embodiments of a seventh aspect of the disclosure provide another apparatus for establishing a shared session, applied to an access network device. The apparatus includes: a transceiver unit, configured to receive a protocol data unit (PDU) session establishment request from a user equipment (UE), in which the PDU session establishment request includes a multimodal service identifier; the transceiver unit is further configured to send the PDU session establishment request to an access and mobility management function (AMF), and to send the PDU session establishment request to a session management function (SMF) through the AMF, in which the SMF binds a PDU session corresponding to the PDU session establishment request with a shared N4 session corresponding to the multimodal service identifier, so that a plurality of PDU sessions corresponding to the multimodal service identifier share the shared N4 session.

Embodiments of an eighth aspect of the disclosure provide another apparatus for establishing a shared session, applied to an access and mobility management function (AMF). The apparatus includes: a transceiver unit, configured to receive a protocol data unit (PDU) session establishment request from a user equipment (UE) through an access network device, in which the PDU session establishment request includes a multimodal service identifier; a processing unit, configured to determine a target session management function (SMF) based on the multimodal service identifier; the transceiver unit is further configured to send the PDU session establishment request to the target SMF.

Embodiments of a ninth aspect of the disclosure provide a communication device including a transceiver; a memory; and a processor. The processor is connected to the transceiver and the memory respectively, and configured to control the transceiver to receive and send wireless signals, and to implement the method for establishing a shared session according to the embodiments of the first aspect of the disclosure, or the method for establishing a shared session according to the embodiments of the second aspect of the disclosure, or method for establishing a shared session according to the embodiments of the third aspect of the disclosure, or the method for establishing a shared session according to the embodiments of the fourth aspect of the disclosure by executing computer-executable instructions on the memory.

Embodiments of a tenth aspect of the disclosure provide a communication apparatus including a processor and an interface circuit. The interface circuit is configured to receive code instructions and transmit the code instructions to the processor. The processor is configured to run the code instructions to execute the method for establishing a shared session according to the embodiments of the first aspect of the disclosure, or the method for establishing a shared session according to the embodiments of the second aspect of the disclosure, or method for establishing a shared session according to the embodiments of the third aspect of the disclosure, or the method for establishing a shared session according to the embodiments of the fourth aspect of the disclosure.

Embodiments of an eleventh aspect of the disclosure provide a computer storage medium having computer-executable instructions stored thereon. After the computer-executable instructions are executed by a processor, the method for establishing a shared session according to the embodiments of the first aspect of the disclosure, or the method for establishing a shared session according to the embodiments of the second aspect of the disclosure, or method for establishing a shared session according to the embodiments of the third aspect of the disclosure, or the method for establishing a shared session according to the embodiments of the fourth aspect of the disclosure is implemented.

Embodiments of a twelfth aspect of the disclosure provide a computer program product including computer programs. When the computer programs are executed by a processor, the method for establishing a shared session according to the embodiments of the first aspect of the disclosure, or the method for establishing a shared session according to the embodiments of the second aspect of the disclosure, or method for establishing a shared session according to the embodiments of the third aspect of the disclosure, or the method for establishing a shared session according to the embodiments of the fourth aspect of the disclosure is implemented.

With the method for establishing a shared session, the apparatus for establishing a shared session, and the communication device according to the embodiments of the disclosure, the SMF receives the PDU session establishment request from the UE through the access network device, in which the PDU session establishment request includes the multimodal service identifier. The SMF determines the corresponding PDU session according to the PDU session establishment request, and binds the PDU session to the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
FIG 1 is a flowchart of a method for establishing a shared session provided by an embodiment of the present disclosure;
FIG 2 is a flowchart of another method for establishing a shared session provided by an embodiment of the present disclosure;
FIG 3 is a flowchart of another method for establishing a shared session provided by an embodiment of the present disclosure;
FIG 4 is a flowchart of another method for establishing a shared session provided by an embodiment of the present disclosure;
FIG 5 is a flowchart of another method for establishing a shared session provided by an embodiment of the present disclosure;
FIG 6 is a flowchart of another method for establishing a shared session provided by an embodiment of the present disclosure;
FIG 7 is a flowchart of another method for establishing a shared session provided by an embodiment of the present disclosure;
FIG 8 is a flowchart of another method for establishing a shared session provided by an embodiment of the present disclosure;
FIG 9 is a flowchart of another method for establishing a shared session provided by an embodiment of the present disclosure;
FIG 10 is a flowchart of another method for establishing a shared session provided by an embodiment of the present disclosure;
FIG 11 is a flowchart of another method for establishing a shared session provided by an embodiment of the present disclosure;
FIG 12 is a block diagram of an apparatus for establishing a shared session provided by an embodiment of the present disclosure;
FIG 13 is a block diagram of another apparatus for establishing a shared session provided by an embodiment of the present disclosure;
FIG 14 is a block diagram of another apparatus for establishing a shared session provided by an embodiment of the present disclosure;
FIG 15 is a block diagram of another apparatus for establishing a shared session provided by an embodiment of the present disclosure;
FIG 16 is a block diagram of a user equipment (UE) provided by an embodiment of the present disclosure; and
FIG 17 is a block diagram of a network side device provided by an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

Embodiments of the present disclosure are described in detail below, examples of which are illustrated in the accompanying drawings. The same or similar elements are denoted by like reference numerals throughout the descriptions. The embodiments described herein with reference to drawings are explanatory, illustrative, and used to generally understand the present disclosure. The embodiments shall not be construed to limit the present disclosure.

With the rapid development of a mobile network, the era of Internet of Everything is coming. Limited by a capability of a single device, a single UE may not complete a complex requirement and mission. In this case, multiple UEs may need to cooperate closely to complete the complex requirement and mission. For example, in industrial scenarios, multiple different types of robots, monitors, and controllers need to be closely cooperate to complete a mission of the production line. For another example, in a future smart stage, multiple cameras, microphones, background processing servers, consoles and speakers may need to cooperate closely to present a perfect stage effect.

However, the current standardized protocol establishes a session only for a single UE. Therefore, how to realize a solution of multiple UEs sharing a session is a problem to be solved.

When the UE establishes a protocol data unit (PDU) session, for the PDU session, a session management function (SMF) and a user plane function (UPF) will establish N4 session context, respectively. The SMF and the UPF communicate through an N4 interface, and data transmitted through the communication between the SMF and the UPF can be included in a structure of the N4 session. The SMF may also store a relationship between the N4 session and the PDU session. For one PDU session, one N4 session is established.

The SMF can store UE session context and the N4 session context. The N4 session context can include at least one of the following information:
1. N4 session identifier (i.e., N4 session ID), list of usage reporting rules (URRs) (i.e., List of URRs), list of quality of service (QoS) enforcement rules (QERs) (i.e., List of QERs), list of forwarding action rules (FARs) (i.e., List of FARs), list of multi-access rules (MARs) (i.e., List of MARs);
2. List of packet detection rules (PDRs) (i.e., List of PDRs), which may include the following information:
   1) tunnel information (Tunnel info);
   2) packet filter set (PFS), including some rules for filtering data packets;
   3) QoS Flow ID (QFI).

As an example, attribute information in the List of PDRs may be as shown in Table 1.

**Table 1**

| **Attribute** | | **Description** | **Comment** |
|---|---|---|---|
| N4 Session ID | | Identifies the N4 session associated to this PDR. | |
| Rule ID | | Unique identifier to identify this rule. | |
| Precedence | | Determines the order, in which the detection information of all rules is applied. | |
| | Source interface | Contains the values "access side", "core side", "SMF", "N6-LAN", "5G VN internal". | Combination of UE IP address (together with Network instance, if necessary), CN tunnel info, |
| Packet Detection Information | UE IP address | One IPv4 address and/or one IPv6 prefix with prefix length. | packet filter set, application identifier, Ethernet PDU Session |
| | Network instance | Identifies the Network instance associated with the incoming packet. | Information and QFI is used for traffic detection. |
| | Core Network (CN) tunnel info | CN tunnel info on N3, N9 interfaces, i.e. F-TEID. | Source interface identifies the interface for incoming packets where the PDR applies, e.g. from access side (i.e. up-link), from core side (i.e. down-link), from SMF, from N6-LAN (i.e. the Destination Network (DN) or the local DN), or from "5G VN internal" (i.e. local switch). Details like all the combination possibilities on N3, N9 interfaces are left for stage 3 decision. |
| | Packet Filter Set | Details see clause 5.7.6. | |
| | Application identifier | | |
| | QoS Flow ID | Contains the value of 5QI or non-standardized QFI. | |
| | Ethernet PDU Session Information | Refers to all the downlink Ethernet packets matching an Ethernet PDU session, as further described in clause 5.6.10.2 and in TS 29.244 [65]. | |
| | Framed Route Information | Refers to Framed Routes defined in clause 5.6.14. | |
| Packet replication and detection carry on information | Packet replication skip information | Contains UE address indication or N19/N6 indication. If the packet matches the packet replication skip information, i.e. source address of the packet is the UE address or the packet has been received on the interface in the packet replication skip information, the UP function neither creates a copy of the packet nor applies the corresponding processing (i.e. FAR, QER, URR). Otherwise the UPF performs a copy and applies the corresponding processing (i.e. FAR, QER, URR). | |
| | Carry on indication | Instructs the UP function to continue the packet detection process, i.e. lookup of the other PDRs. | |
| Outer header removal | | Instructs the UPF to remove one or more outer header(s) (e.g. IP+UDP+GTP (General Packet Radio Service Tunnelling Protocol), IP + possibly UDP, VLAN tag), from the incoming packet. | Any extension header shall be stored for this packet. |
| Forwarding Action Rule ID | | The Forwarding Action Rule ID identifies a forwarding action that has to be applied. | |
| Multi-Access Rule ID | | The Multi-Access Rule ID identifies an action to be applied for handling forwarding for a MA PDU Session. | |
| List of Usage Reporting Rule ID(s) | | Every Usage Reporting Rule ID identifies a measurement action that has to be applied. | |
| List of QoS Enforcement Rule ID(s) | | Every QoS Enforcement Rule ID identifies a QoS enforcement action that has to be applied. | |

It can be understood that each element and each correspondence in Table 1 exist independently. These elements and correspondences are exemplarily listed in the same table, but it does not indicate that all elements, correspondence must exist simultaneously as shown in Table 1. The value of each element and each correspondence do not depend on any other element value or correspondence in Table 1. Therefore, those skilled in the art can understand that the value of each element in Table 1 or each correspondence in Table 1 may be considered as an independent embodiment.

In view of the above existing problems, the disclosure provides a method for establishing a shared session, an apparatus for establishing a shared session and a communication device.

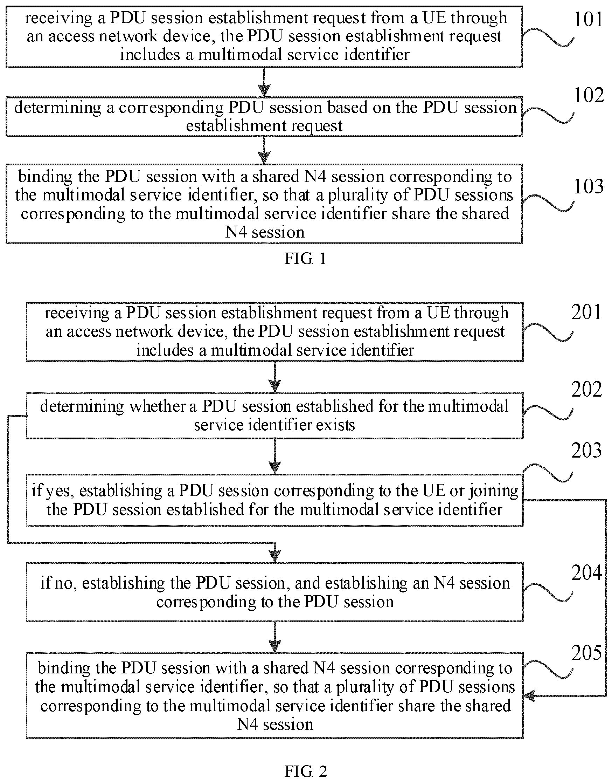

FIG 1 is a flowchart of a method for establishing a shared session provided by an embodiment of the present disclosure. The method may be performed by a session management function (SMF).

As illustrated in FIG 1, the method may include the followings.

At step 101, a protocol data unit (PDU) session establishment request from a user equipment (UE) is received through an access network device. The PDU session establishment request includes a multimodal service identifier.

The UE may be a device that provides voice and/or data connectivity to a user, a handheld device with a wireless connection function, or other processing devices connected to a wireless modem, and the like. In different systems, the name of the UE may be different. The wireless UE can communicate with one or more core networks (CNs) via a radio access network (RAN), and the wireless UE can be a mobile terminal device, such as a mobile phone (or called "cellular" telephone) and a computer with a mobile terminal, such as a portable, pocket, hand-held, computer built-in or vehicle-mounted mobile device, which may exchange voice and/or data with the radio access network.

For example, the UE may be a personal communication service (PCS) phone, a cordless phone, a session initiated protocol (SIP) phone, a wireless local loop (WLL) station, a personal digital assistant (PDA) and other devices. The wireless UE may also be called a system, a subscriber unit, a subscriber station, a mobile station, a mobile, a remote station, an access point, a remote terminal, an access terminal, a user terminal, a user agent, and a user device, which is not limited in embodiments of the disclosure.

The access network device may be a base station, for example. The base station may include multiple cells providing services for UEs. Depending on the specific application, each cell can contain multiple TRPs (Transmission Reception Points or Transmit Receive Points), each TRP can contain one or more antenna panels. Or, the base station can be a device in the access network that communicates with a wireless terminal through one or more sectors on an air interface, or other names. For example, the base station involved in the embodiments of the disclosure may be a base transceiver station (BTS) in a global system for mobile communications (GSM) or code division multiple access (CDMA), it can also be a base station (NodeB) in wide-band code division multiple access (WCDMA), and it can also be an evolutional Node B (referred to as eNB or e-NodeB) in a long term evolution (LTE) system, a 5G base station (referred to as gNB) in the 5G network architecture (next generation system), or can also be a home evolved Node B (HeNB), a relay node, a femto, a pico, etc., which is not limited in embodiments of the disclosure.

In the embodiments of the disclosure, a multimodal service refers to a service or mission that requires cooperation of multiple UEs, that is, multiple UEs perform the same multimodal service.

In the embodiment of the disclosure, the UE may send the PDU session establishment request to the SMF through the access network device. The PDU session establishment request may include the multimodal service identifier, and the multimodal service identifier may be configured to identify a same multimodal service, or, the multimodal service identifier may be configured to identify multiple UEs sharing a PDU session.

Alternatively, the UE may send the PDU session establishment request to an access and mobility management function (AMF) through the access network device, and send the PDU session establishment request to the SMF through the AMF.

In a possible implementation of the embodiment of the disclosure, the AMF may send the PDU session establishment request to the SMF responsible for the above multimodal service.

In another possible implementation of the embodiment of the disclosure, the AMF may send the PDU session establishment request to the SMF to which multiple PDU sessions corresponding to the multimodal service identifier belong.

At step 102, a corresponding PDU session is determined based on the PDU session establishment request.

In the embodiment of the disclosure, after receiving the PDU session establishment request, the SMF may determine the PDU session corresponding to the PDU session establishment request.

At step 103, the PDU session is bound with a shared N4 session corresponding to the multimodal service identifier, so that a plurality of PDU sessions corresponding to the multimodal service identifier share the shared N4 session.

In the embodiment of the disclosure, the shared N4 session corresponding to the multimodal service identifier refers to an N4 session corresponding to a PDU session established by the UE that performs a multimodal service corresponding to the multimodal service identifier.

In the embodiment of the disclosure, the SMF can bind the PDU session determined in step 102 with the shared N4 session corresponding to the multimodal service identifier, so that multiple PDU sessions corresponding to the multimodal service identifier can share the shared N4 session.

With the method for establishing a shared session according to the embodiment of the disclosure, the SMF receives the PDU session establishment request from the UE through the access network device, in which the PDU session establishment request includes the multimodal service identifier. The SMF determines the corresponding PDU session according to the PDU session establishment request, and binds the PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

The embodiments of the disclosure further provide another method for establishing a shared session. FIG 2 is a flowchart of another method for establishing a shared session provided by an embodiment of the present disclosure. The method may be performed by an SMF. The method can be executed alone, or in combination with any embodiment in the disclosure or a possible implementation in the embodiment, or in combination with any technical solution in the related art.

As illustrated in FIG 2, the method may include the followings.

At step 201, a PDU session establishment request from a UE is received through an access network device. The PDU session establishment request includes a multimodal service identifier.

In the embodiment of the disclosure, step 201 may be implemented in any way described in the embodiments of the disclosure, which is not limited in the embodiment of the disclosure, and will not be repeated here.

In any embodiment of the disclosure, the multimodal service identifier may include one or more of a mission identifier (mission ID), a shared session identifier (for example, the shared session identifier may be a shared PDU session ID) and a group identifier (group ID).

At step 202, it is determined whether a PDU session established for the multimodal service identifier exists.

In the embodiment of the disclosure, after receiving the PDU session establishment request, the SMF can determine, according to the multimodal service identifier, whether another UE that performs a multimodal service corresponding to the multimodal service identifier has established a PDU session. In the case that another UE performing the above-mentioned multimodal service has established the PDU session, that is, there are the PDU session established for the multimodal service identifier, in this case, step 203 may be executed. In the case that no other UE performing the above-mentioned multimodal service establishes the PDU session, that is, there is no PDU session established for the multimodal service identifier, in this case, step 204 may be executed.

At step S203, if yes, a PDU session corresponding to the UE is established or it joins the PDU session established for the multimodal service identifier.

In the embodiment of the disclosure, in the case that another UE performing the above multimodal service has established the PDU session, the SMF can establish the PDU session corresponding to the UE that initiates the PDU session establishment request, or join the PDU session established by another UE performing the above multimodal service. A shared N4 session corresponding to the multimodal service identifier may be an N4 session corresponding to the PDU session established by the UE performing the above multimodal service.

At step 204, if no, the PDU session is established, and an N4 session corresponding to the PDU session is established.

In the embodiment of the disclosure, in the case that no other UE performing the above multimodal service establishes the PDU session, the SMF can establish the PDU session corresponding to the UE that initiates the PDU session establishment request and establish the N4 session corresponding to the PDU session. In this case, the N4 session may be the shared N4 session corresponding to the multimodal service identifier.

As an example, the SMF can determine whether another UE performing the multimodal service corresponding to the multimodal service identifier has established the PDU session according to the multimodal service identifier, such as mission ID or group ID, and if so, the SMF can establish a new PDU session and update N4 session context, or join the existing PDU session and update the N4 session context, and if no, the SMF can establish a new PDU session and new N4 session context.

At step 205, the PDU session is bound with a shared N4 session corresponding to the multimodal service identifier, so that a plurality of PDU sessions corresponding to the multimodal service identifier share the shared N4 session.

In the embodiment of the disclosure, step 205 may be implemented in any way described in the embodiments of the disclosure, which is not limited in the embodiment of the disclosure, and will not be repeated here.

With the method for establishing a shared session according to the embodiment of the disclosure, the SMF receives the PDU session establishment request from the UE through the access network device, in which the PDU session establishment request includes the multimodal service identifier. The SMF determines the corresponding PDU session according to the PDU session establishment request, and binds the PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

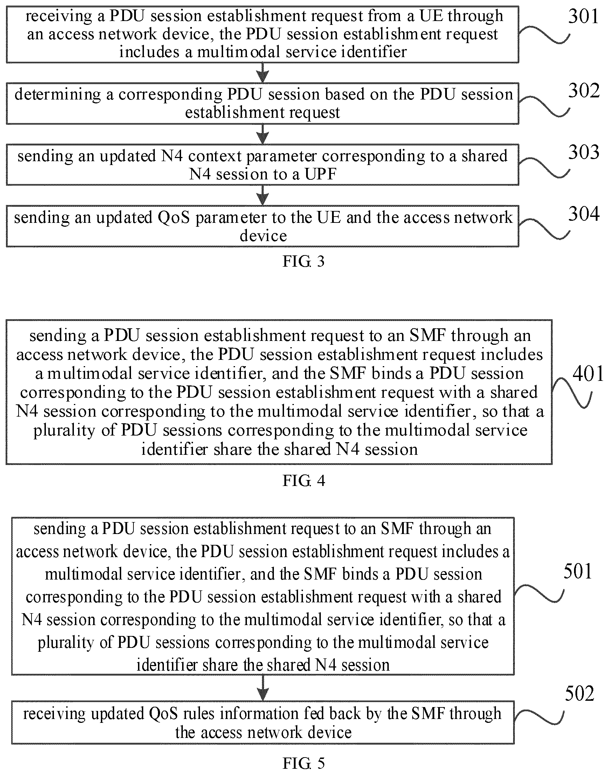

The embodiments of the disclosure further provide another method for establishing a shared session. FIG 3 is a flowchart of another method for establishing a shared session provided by an embodiment of the present disclosure. The method may be performed by an SMF. The method can be executed alone, or in combination with any embodiment in the disclosure or a possible implementation in the embodiment, or in combination with any technical solution in the related art.

As illustrated in FIG 3, the method may include the followings.

At step 301, a PDU session establishment request from a UE is received through an access network device. The PDU session establishment request includes a multimodal service identifier.

At step 302, a corresponding PDU session is determined based on the PDU session establishment request.

In the embodiment of the disclosure, steps 301-302 may be implemented in any way described in the embodiments of the disclosure, which are not limited in the embodiment of the disclosure, and will not be repeated here.

At step 303, an updated N4 context parameter corresponding to a shared N4 session is sent to a user plane function (UPF).

In the embodiment of the disclosure, the SMF may send the updated N4 context parameter corresponding to the shared N4 session to the UPF. For example, the SMF may send N4 session modification information to the UPF, in which the information may include the updated N4 context parameter, so as to update the updated N4 context parameter to the UPF.

At step 304, an updated quality of service (QoS) parameter is sent to the UE and the access network device.

In the embodiment of the disclosure, the SMF may send the updated QoS parameter to the UE and the access network device. The updated QoS parameter may be a part of the updated N4 context parameter. Correspondingly, after receiving the updated QoS parameter, the UE may determine a service level and configuration corresponding to itself according to the updated QoS parameter, so that a corresponding flow control measure can be taken. Correspondingly, after receiving the updated QoS parameter, the access network device can provide corresponding services for the UE according to the updated QoS parameter.

In a possible implementation of the embodiment of the disclosure, the updated QoS parameter may include updated QoS profile information and updated QoS rules, and the SMF may send the updated QoS profile information to the access network device and send the updated QoS rules information to the UE.

As an example, the SMF can send the updated QoS profile information to the access network device through the AMF, and send the updated QoS rules information to the access network device through the AMF, and the access network device forwards the updated QoS rules information to the UE.

With the method for establishing a shared session according to the embodiment of the disclosure, the SMF receives the PDU session establishment request from the UE through the access network device, in which the PDU session establishment request includes the multimodal service identifier. The SMF determines the corresponding PDU session according to the PDU session establishment request, and binds the PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

The embodiments of the disclosure further provide another method for establishing a shared session. FIG 4 is a flowchart of another method for establishing a shared session provided by an embodiment of the present disclosure. The method may be performed by a UE. The method can be executed alone, or in combination with any embodiment in the disclosure or a possible implementation in the embodiment, or in combination with any technical solution in the related art.

As illustrated in FIG 4, the method may include the followings.

At step 401, a PDU session establishment request is sent to an SMF through an access network device. The PDU session establishment request includes a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

In the embodiments of the disclosure, a multimodal service refers to a service or mission that requires cooperation of multiple UEs, that is, multiple UEs perform the same multimodal service.

In the embodiment of the disclosure, the UE may send the PDU session establishment request to the SMF through the access network device. The PDU session establishment request may include the multimodal service identifier, and the multimodal service identifier may be configured to identify a same multimodal service, or, the multimodal service identifier may be configured to identify multiple UEs sharing a PDU session.

Alternatively, the UE may send the PDU session establishment request to an AMF through the access network device, and send the PDU session establishment request to the SMF through the AMF.

In a possible implementation of the embodiment of the disclosure, the AMF may send the PDU session establishment request to the SMF responsible for the above multimodal service.

In another possible implementation of the embodiment of the disclosure, the AMF may send the PDU session establishment request to the SMF to which multiple PDU sessions corresponding to the multimodal service identifier belong.

In the embodiment of the disclosure, after receiving the PDU session establishment request, the SMF can determine, according to the PDU session establishment request, the PDU session corresponding to the PDU session establishment request, and the SMF can bind the above PDU session with the shared N4 session corresponding to the multimodal service identifier, so that the multiple PDU sessions corresponding to the multimodal service identifier can share the shared N4 session.

It should be noted that the explanation of the method performed on the SMF side in any of the above-mentioned embodiments of FIG 1 to FIG 3 is also applicable to the method performed on the UE side in the embodiment, and the implementation principles are similar, which are not elaborated here.

With the method for establishing a shared session according to the embodiment of the disclosure, the UE sends the PDU session establishment request to the SMF through the access network device, in which the PDU session establishment request includes the multimodal service identifier. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

The embodiments of the disclosure further provide another method for establishing a shared session. FIG 5 is a flowchart of another method for establishing a shared session provided by an embodiment of the present disclosure. The method may be performed by a UE. The method can be executed alone, or in combination with any embodiment in the disclosure or a possible implementation in the embodiment, or in combination with any technical solution in the related art.

As illustrated in FIG 5, the method includes the followings.

At step 501, a PDU session establishment request is sent to an SMF through an access network device. The PDU session establishment request includes a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

In the embodiment of the disclosure, step 501 may be implemented in any way described in the embodiments of the disclosure, which is not limited in the embodiment of the disclosure, and will not be repeated here.

In any embodiment of the disclosure, the multimodal service identifier may include one or more of a mission identifier (mission ID), a shared session identifier (for example, the shared session identifier may be a shared PDU session ID) and a group identifier (group ID).

At step 502, updated QoS rules information fed back by the SMF is received through the access network device.

In the embodiment of the disclosure, the SMF may send an updated N4 context parameter corresponding to the shared N4 session to a UPF. The updated N4 context parameter may include an updated QoS parameter. The updated QoS parameter is sent to the UE. The updated QoS parameter may include updated QoS rules. Correspondingly, after receiving the updated QoS rules, the UE may determine a service level and configuration corresponding to itself according to the updated QoS rules, so that a corresponding flow control measure can be taken.

As an example, the SMF may send the updated QoS rules information to the access network device through the AMF, and the access network device forwards the updated QoS rules information to the UE.

With the method for establishing a shared session according to the embodiment of the disclosure, the UE sends the PDU session establishment request to the SMF through the access network device, in which the PDU session establishment request includes the multimodal service identifier. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

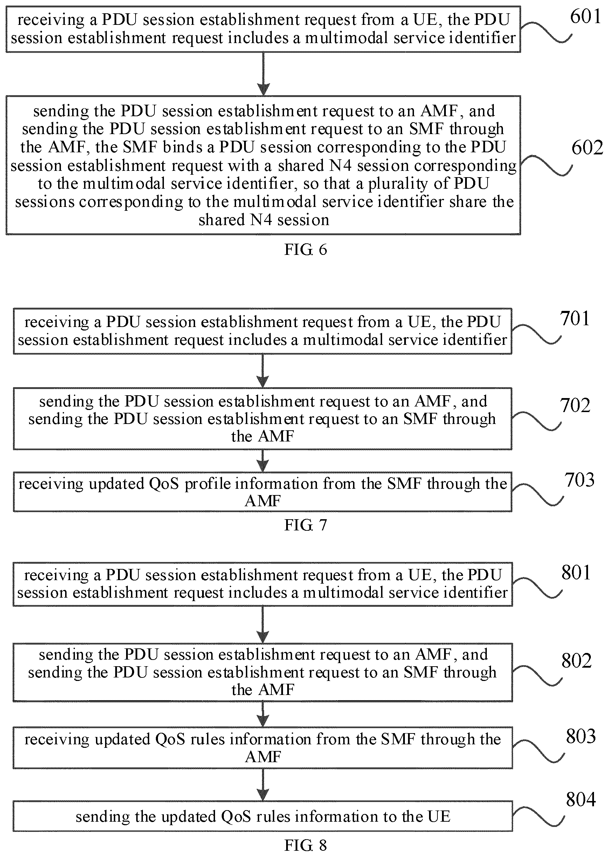

The embodiments of the disclosure further provide another method for establishing a shared session. FIG 6 is a flowchart of another method for establishing a shared session provided by an embodiment of the present disclosure. The method may be performed by an access network device. The method can be executed alone, or in combination with any embodiment in the disclosure or a possible implementation in the embodiment, or in combination with any technical solution in the related art.

As illustrated in FIG 6, the method includes the followings.

At step 601, a PDU session establishment request from a UE is received. The PDU session establishment request includes a multimodal service identifier.

In the embodiments of the disclosure, a multimodal service refers to a service or mission that requires cooperation of multiple UEs, that is, multiple UEs perform the same multimodal service.

In the embodiment of the disclosure, the PDU session establishment request may include the multimodal service identifier, and the multimodal service identifier may be configured to identify a same multimodal service, or, the multimodal service identifier may be configured to identify multiple UEs sharing a PDU session.

At step 602, the PDU session establishment request is sent to an AMF, and the PDU session establishment request is sent to an SMF through the AMF. The SMF binds a PDU session corresponding to the PDU session establishment request with a shared N4 session corresponding to the multimodal service identifier, so that a plurality of PDU sessions corresponding to the multimodal service identifier share the shared N4 session.

In the embodiment of the disclosure, the UE may send the PDU session establishment request to the AMF through the access network device, and send the PDU session establishment request to the SMF through AMF.

In a possible implementation of the embodiment of the disclosure, the AMF may send the PDU session establishment request to the SMF responsible for the above multimodal service.

In another possible implementation of the embodiment of the disclosure, the AMF may send the PDU session establishment request to the SMF to which multiple PDU sessions corresponding to the multimodal service identifier belong.

In the embodiment of the disclosure, after receiving the PDU session establishment request, the SMF can determine, according to the PDU session establishment request, the PDU session corresponding to the PDU session establishment request, and the SMF can bind the above PDU session with the shared N4 session corresponding to the multimodal service identifier, so that the multiple PDU sessions corresponding to the multimodal service identifier can share the shared N4 session.

It should be noted that the explanation of the method performed on the SMF side in any of the above-mentioned embodiments of FIG 1 to FIG 3 is also applicable to the method performed on the access network device side in the embodiment, and the implementation principles are similar, which are not elaborated here.

With the method for establishing a shared session according to the embodiment of the disclosure, the access network device receives the PDU session establishment request from the UE, in which the PDU session establishment request includes the multimodal service identifier. The access network device sends the PDU session establishment request to the AMF, and sends the PDU session establishment request to the SMF through the AMF. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

The embodiments of the disclosure further provide another method for establishing a shared session. FIG 7 is a flowchart of another method for establishing a shared session provided by an embodiment of the present disclosure. The method may be performed by an access network device. The method can be executed alone, or in combination with any embodiment in the disclosure or a possible implementation in the embodiment, or in combination with any technical solution in the related art.

As illustrated in FIG 7, the method includes the followings.

At step 701, a PDU session establishment request from a UE is received. The PDU session establishment request includes a multimodal service identifier.

In any embodiment of the disclosure, the multimodal service identifier may include one or more of a mission identifier (mission ID), a shared session identifier (for example, the shared session identifier may be a shared PDU session ID) and a group identifier (group ID).

At step 702, the PDU session establishment request is sent to an AMF, and the PDU session establishment request is sent to an SMF through the AMF.

In the embodiment of the disclosure, after receiving the PDU session establishment request sent by the UE, the access network device may send the PDU session establishment request to the AMF, and send the PDU session establishment request to the SMF through AMF. Correspondingly, after receiving the PDU session establishment request, the SMF can bind the PDU session corresponding to the PDU session establishment request with the shared N4 session corresponding to the multimodal service identifier, so that the multiple PDU sessions corresponding to the multimodal service identifier can share the shared N4 session.

In the embodiment of the disclosure, steps 701-702 may be implemented in any way described in the embodiments of the disclosure, which are not limited in the embodiment of the disclosure, and will not be repeated here.

At step 703, updated QoS profile information from the SMF is received through the AMF.

In the embodiment of the disclosure, the SMF may send an updated N4 context parameter corresponding to the shared N4 session to a UPF. The updated N4 context parameter may include an updated QoS parameter. The updated QoS parameter is sent to the access network device. The updated QoS parameter may include the updated QoS profile information. Correspondingly, after receiving the updated QoS profile information, the access network device may provide corresponding services for the UE according to the updated QoS profile information.

With the method for establishing a shared session according to the embodiment of the disclosure, the access network device receives the PDU session establishment request from the UE, in which the PDU session establishment request includes the multimodal service identifier. The access network device sends the PDU session establishment request to the AMF, and sends the PDU session establishment request to the SMF through the AMF. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

The embodiments of the disclosure further provide another method for establishing a shared session. FIG 8 is a flowchart of another method for establishing a shared session provided by an embodiment of the present disclosure. The method may be performed by an access network device. The method can be executed alone, or in combination with any embodiment in the disclosure or a possible implementation in the embodiment, or in combination with any technical solution in the related art.

As illustrated in FIG 8, the method includes the followings.

At step 801, a PDU session establishment request from a UE is received. The PDU session establishment request includes a multimodal service identifier.

At step 802, the PDU session establishment request is sent to an AMF, and the PDU session establishment request is sent to an SMF through the AMF.

In the embodiment of the disclosure, after receiving the PDU session establishment request sent by the UE, the access network device may send the PDU session establishment request to the AMF, and send the PDU session establishment request to the SMF through AMF. Correspondingly, after receiving the PDU session establishment request, the SMF can bind the PDU session corresponding to the PDU session establishment request with the shared N4 session corresponding to the multimodal service identifier, so that the multiple PDU sessions corresponding to the multimodal service identifier can share the shared N4 session.

In the embodiment of the disclosure, steps 801-802 may be implemented in any way described in the embodiments of the disclosure, which are not limited in the embodiment of the disclosure, and will not be repeated here.

At step 803, updated QoS rules information from the SMF is received through the AMF.

At step 804, the updated QoS rules information is sent to the UE.

In the embodiment of the disclosure, the SMF may send an updated N4 context parameter corresponding to the shared N4 session to a UPF. The updated N4 context parameter may include an updated QoS parameter. The updated QoS parameter is sent to the access network device. The updated QoS parameter may include the updated QoS rules information. Correspondingly, after receiving the updated QoS rules information, the access network device may forward the updated QoS rules information to the UE. Correspondingly, after receiving the updated QoS rules information, the UE may determine a service level and configuration corresponding to itself according to the updated QoS rules, so that a corresponding flow control measure can be taken.

With the method for establishing a shared session according to the embodiment of the disclosure, the access network device receives the PDU session establishment request from the UE, in which the PDU session establishment request includes the multimodal service identifier. The access network device sends the PDU session establishment request to the AMF, and sends the PDU session establishment request to the SMF through the AMF. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

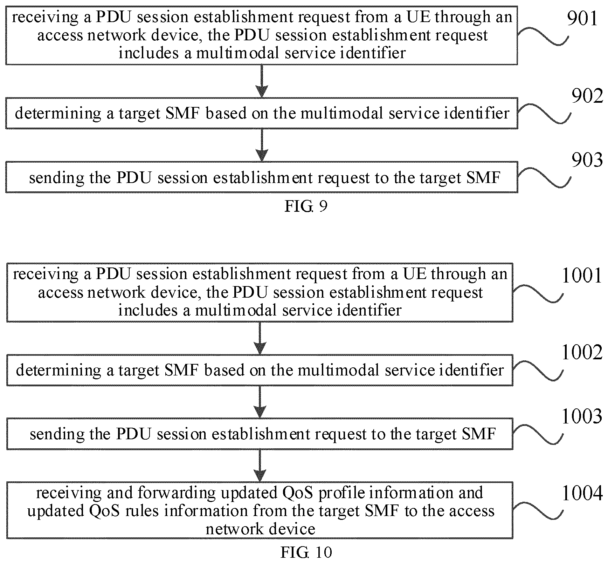

The embodiments of the disclosure further provide another method for establishing a shared session. FIG 9 is a flowchart of another method for establishing a shared session provided by an embodiment of the present disclosure. The method may be performed by an AMF. The method can be executed alone, or in combination with any embodiment in the disclosure or a possible implementation in the embodiment, or in combination with any technical solution in the related art.

As illustrated in FIG 9, the method includes the followings.

At step 901, a PDU session establishment request from a UE is received through an access network device. The PDU session establishment request includes a multimodal service identifier.

In the embodiments of the disclosure, a multimodal service refers to a service or mission that requires cooperation of multiple UEs, that is, multiple UEs perform the same multimodal service.

In the embodiment of the disclosure, the PDU session establishment request may include the multimodal service identifier, and the multimodal service identifier may be configured to identify a same multimodal service, or, the multimodal service identifier may be configured to identify multiple UEs sharing a PDU session.

In the embodiment of the disclosure, the UE sends the PDU session establishment request to the AMF through the access network device. Correspondingly, the AMF may receive the PDU session establishment request sent by the UE through the access network device.

At step 902, a target SMF is determined based on the multimodal service identifier.

In the embodiment of the disclosure, the target SMF refers to an SMF needs to receive the PDU session establishment request.

In the embodiment of the disclosure, the AMF may determine the target SMF based on the multimodal service identifier in the PDU session establishment request.

In a possible implementation of the embodiment of the disclosure, the AMF may take the SMF responsible for the above multimodal service as the target SMF.

In another possible implementation of the embodiment of the disclosure, the AMF may send take the SMF to which multiple PDU sessions corresponding to the multimodal service identifier belong as the target SMF.

At step 903, the PDU session establishment request is sent to the target SMF.

In the embodiment of the disclosure, the AMF may send the PDU session establishment request to the target SMF after determining the target SMF. Correspondingly, after receiving the PDU session establishment request, the target SMF can determine, according to the PDU session establishment request, a corresponding PDU session, and the SMF can bind the above PDU session with a shared N4 session corresponding to the multimodal service identifier, so that multiple PDU sessions corresponding to the multimodal service identifier can share the shared N4 session.

It should be noted that the explanation of the method performed on the SMF side in any of the above-mentioned embodiments of FIG 1 to FIG 3 is also applicable to the method performed on the AMF side in the embodiment, and the implementation principles are similar, which are not elaborated here.

With the method for establishing a shared session according to the embodiment of the disclosure, the AMF receives the PDU session establishment request from the UE through the access network device, in which the PDU session establishment request includes the multimodal service identifier. The AMF determines the target SMF according to the multimodal service identifier, and sends the PDU session establishment request to the target SMF. The target SMF determines the corresponding PDU session according to the PDU session establishment request, binds the above PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

The embodiments of the disclosure further provide another method for establishing a shared session. FIG 10 is a flowchart of another method for establishing a shared session provided by an embodiment of the present disclosure. The method may be performed by an AMF. The method can be executed alone, or in combination with any embodiment in the disclosure or a possible implementation in the embodiment, or in combination with any technical solution in the related art.

As illustrated in FIG 10, the method includes the followings.

At step 1001, a PDU session establishment request from a UE is received through an access network device. The PDU session establishment request includes a multimodal service identifier.

In any embodiment of the disclosure, the multimodal service identifier may include one or more of a mission identifier (mission ID), a shared session identifier (for example, the shared session identifier may be a shared PDU session ID) and a group identifier (group ID).

At step 1002, a target SMF is determined based on the multimodal service identifier.

At step 1003, the PDU session establishment request is sent to the target SMF.

In the embodiment of the disclosure, steps 1001-1003 may be implemented in any way described in the embodiments of the disclosure, which are not limited in the embodiment of the disclosure, and will not be repeated here.

At step 1004, updated QoS profile information and updated QoS rules information from the target SMF are received and forwarded to the access network device.

In the embodiment of the disclosure, the target SMF may send the updated QoS profile information and the updated QoS rules information to the access network device through the AMF. Correspondingly, after receiving the updated QoS profile information and the updated QoS rules information, the access network device may provide corresponding services for the UE according to the updated QoS profile information. Further, the access network device may forward the updated QoS rules information to the UE. Correspondingly, after receiving the updated QoS rules information, the UE may determine a service level and configuration corresponding to itself according to the updated QoS rules, so that a corresponding flow control measure can be taken.

With the method for establishing a shared session according to the embodiment of the disclosure, the AMF receives the PDU session establishment request from the UE through the access network device, in which the PDU session establishment request includes the multimodal service identifier. The AMF determines the target SMF according to the multimodal service identifier, and sends the PDU session establishment request to the target SMF. The target SMF determines the corresponding PDU session according to the PDU session establishment request, binds the above PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

It should be noted that the foregoing possible implementations may be implemented independently or in combination with each other, which is not limited in the embodiments of the disclosure.

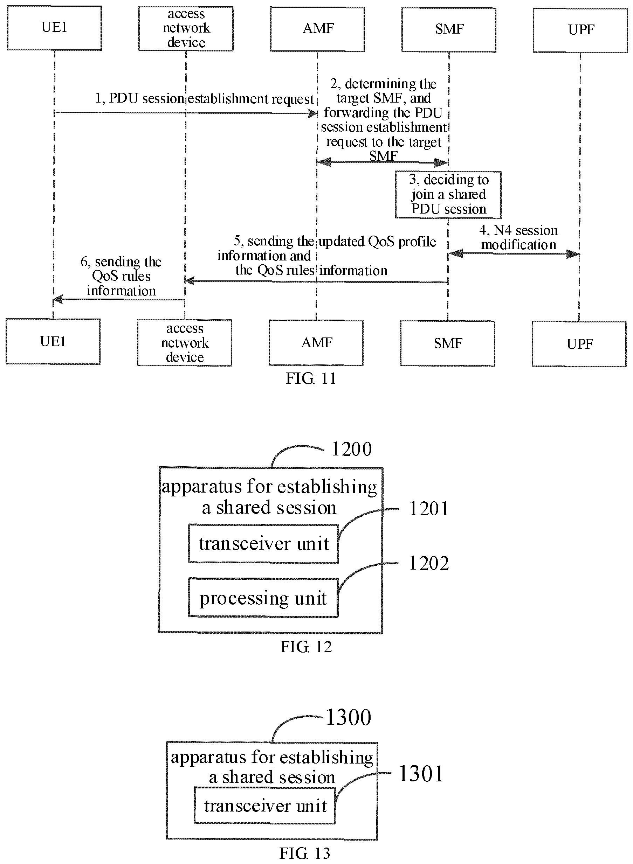

In any embodiment of the disclosure, multiple UEs performing the same multimodal service can establish the PDU session, respectively. The established PDU session can carry a multimodal service identifier. The network can select the same or specific SMF (which is recorded as the target SMF in the disclosure) according to the multimodal service identifier, and uses the same N4 session (which is recorded as the shared N4 session in the disclosure) at the same time. As an example, an interaction process between the UE, the access network device, the AMF, the SMF and the UPF may be shown in FIG 11.

At step 1, the UE1 can initiate a multimodal service. The multimodal service refers to a mission to be completed by multiple UEs in a cooperation manner. The mission ID or shared PDU session ID or group ID is obtained through an application layer. Each of the above ID is used to identify the same multimodal service, or to identify a group of UEs that can share a PDU session. The UE1 initiates a session establishment procedure, and sends a PDU session establishment request to the AMF through the access network device, in which the PDU session establishment request may include information such as coordinated type and the mission ID.

At step 2, the AMF determines the target SMF according to the request type, and forwards the PDU session establishment request (PDUSession_CreateSMContext Request) to the target SMF.

At step 3, the target SMF determines, according to the multimodal service identifier (such as mission ID or group ID) in the PDU session establishment request sent by the AMF, whether another UE performing the multimodal service corresponding to the multimodal service identifier has established the PDU session, if yes, the target SMF can establish a new PDU session and update the N4 session context, or join an existing PDU session and update the N4 session context, if no, the target SMF can establish a new PDU session and establish a new N4 session context.

At step 4, the target SMF determines that there is the PDU session established for the multimodal service identifier, and then sends N4 session modification information to the UPF, and updates the updated N4 context parameter to the UPF.

At steps 5 and 6, the target SMF sends the updated QoS profile information related to the session to the access network device, and sends the updated QoS rules information to the UE. For example, the target SMF can send the updated QoS profile information and the updated QoS rules information to the AMF through an N1N2 message, and the AMF sends the updated QoS profile information and the updated QoS rules information to the access network device through an N2PDU session request. The access network device sends the updated QoS rules information to the UE through the N2PDU session request.

Corresponding to the method for establishing a shared session provided by the embodiments of FIGS. 1 to 3, the disclosure also provides an apparatus for establishing a shared session. Since the apparatus for establishing a shared session provided by the embodiments of the disclosure corresponds to the method for establishing a shared session provided by the embodiments of FIGS. 1 to 3, the implementation of the method for establishing a shared session is also applicable to the apparatus for establishing a shared session provided by the embodiments of the disclosure, and will not be described in detail in the embodiments of the disclosure.

FIG 12 is a block diagram of an apparatus for establishing a shared session provided by an embodiment of the present disclosure. The apparatus is applied to an SMF.

As illustrated in FIG 12, the apparatus 1200 may include a transceiver unit 1201, and a processing unit 1202.

The transceiver unit 1201 is configured to receive a protocol data unit (PDU) session establishment request from a user equipment (UE) through an access network device, in which the PDU session establishment request includes a multimodal service identifier.

The processing unit 1202 is configured to determine a corresponding PDU session based on the PDU session establishment request; and to bind the PDU session with a shared N4 session corresponding to the multimodal service identifier, so that a plurality of PDU sessions corresponding to the multimodal service identifier share the shared N4 session.

Alternatively, the processing unit 1202 is specifically configured to: send an updated N4 context parameter corresponding to the shared N4 session to a user plane function (UPF); and send an updated quality of service (QoS) parameter to the UE and the access network device.

Alternatively, the transceiver unit 1201 is specifically configured to: send updated QoS rules information to the UE; and send updated QoS profile information to the access network device.

Alternatively, the processing unit 1202 is specifically configured to: determine whether a PDU session established for the multimodal service identifier exists.

Alternatively, the processing unit 1202 is specifically configured to: if yes, establish a PDU session corresponding to the UE or join the PDU session established for the multimodal service identifier.

Alternatively, the processing unit 1202 is specifically configured to: if no, establish the PDU session, and establish an N4 session corresponding to the PDU session.

Alternatively, the multimodal service identifier comprises one or more of a mission identifier, a shared session identifier and a group identifier.

Alternatively, the multimodal service identifier is configured to identify a same multimodal service, or to identify a plurality of UEs sharing a PDU session.

With the apparatus for establishing a shared session according to the embodiment of the disclosure, the SMF receives the PDU session establishment request from the UE through the access network device, in which the PDU session establishment request includes the multimodal service identifier. The SMF determines the corresponding PDU session according to the PDU session establishment request, and binds the PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

Corresponding to the method for establishing a shared session provided by the embodiments of FIGS. 4 to 5, the disclosure also provides an apparatus for establishing a shared session. Since the apparatus for establishing a shared session provided by the embodiments of the disclosure corresponds to the method for establishing a shared session provided by the embodiments of FIGS. 4 to 5, the implementation of the method for establishing a shared session is also applicable to the apparatus for establishing a shared session provided by the embodiments of the disclosure, and will not be described in detail in the embodiments of the disclosure.

FIG 13 is a block diagram of an apparatus for establishing a shared session provided by an embodiment of the present disclosure. The apparatus is applied to a UE.

As illustrated in FIG 13, the apparatus 1300 may include a transceiver unit 1301.

The transceiver unit 1301 is configured to send a protocol data unit (PDU) session establishment request to a session management function (SMF) through an access network device, in which the PDU session establishment request includes a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

Alternatively, the transceiver unit 1301 is further configured to: receive, through the access network device, updated quality of service (QoS) rules information fed back by the SMF.

Alternatively, the multimodal service identifier comprises one or more of a mission identifier, a shared session identifier and a group identifier.

Alternatively, the multimodal service identifier is configured to identify a same multimodal service, or to identify a plurality of UEs sharing a PDU session.

With the apparatus for establishing a shared session according to the embodiment of the disclosure, the UE sends the PDU session establishment request to the SMF through the access network device, in which the PDU session establishment request includes the multimodal service identifier. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

Corresponding to the method for establishing a shared session provided by the embodiments of FIGS. 6 to 8, the disclosure also provides an apparatus for establishing a shared session. Since the apparatus for establishing a shared session provided by the embodiments of the disclosure corresponds to the method for establishing a shared session provided by the embodiments of FIGS. 6 to 8, the implementation of the method for establishing a shared session is also applicable to the apparatus for establishing a shared session provided by the embodiments of the disclosure, and will not be described in detail in the embodiments of the disclosure.

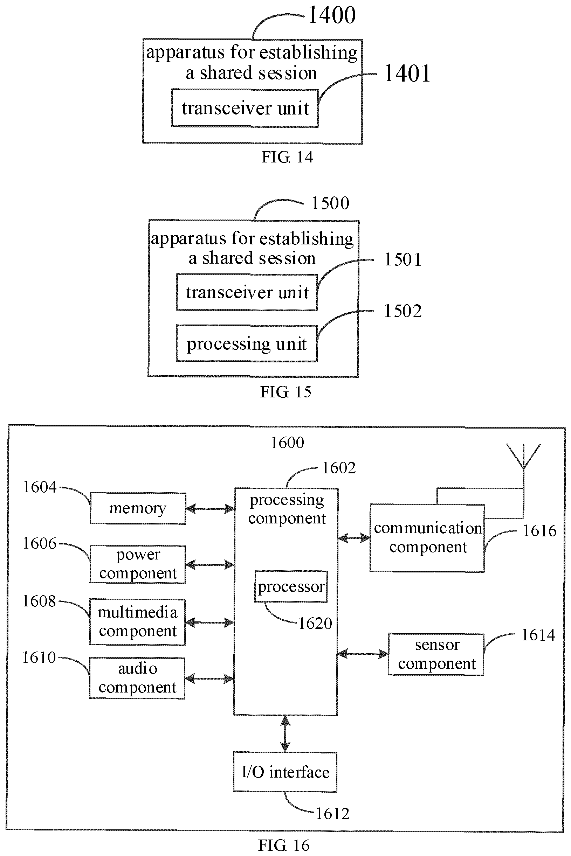

FIG 14 is a block diagram of an apparatus for establishing a shared session provided by an embodiment of the present disclosure. The apparatus is applied to an access network device.

As illustrated in FIG 14, the apparatus 1400 may include a transceiver unit 1401.

The transceiver unit 1401 is configured to: receive a protocol data unit (PDU) session establishment request from a user equipment (UE), in which the PDU session establishment request includes a multimodal service identifier.

The transceiver unit 1401 is further configured to: send the PDU session establishment request to an access and mobility management function (AMF), and send the PDU session establishment request to a session management function (SMF) through the AMF, in which the SMF binds a PDU session corresponding to the PDU session establishment request with a shared N4 session corresponding to the multimodal service identifier, so that a plurality of PDU sessions corresponding to the multimodal service identifier share the shared N4 session.

Alternatively, the transceiver unit 1401 is further configured to: receive, through the AMF, updated quality of service (QoS) profile information from the SMF.

Alternatively, the transceiver unit 1401 is further configured to: receive, through the AMF, updated QoS rules information from the SMF; and send the updated QoS rules information to the UE.

Alternatively, the multimodal service identifier comprises one or more of a mission identifier, a shared session identifier and a group identifier.

Alternatively, the multimodal service identifier is configured to identify a same multimodal service, or to identify a plurality of UEs sharing a PDU session.

With the apparatus for establishing a shared session according to the embodiment of the disclosure, the access network device receives the PDU session establishment request from the UE, in which the PDU session establishment request includes the multimodal service identifier. The access network device sends the PDU session establishment request to the AMF, and sends the PDU session establishment request to the SMF through the AMF. The SMF binds the PDU session corresponding to the PDU session establishment request with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

Corresponding to the method for establishing a shared session provided by the embodiments of FIGS. 9 to 10, the disclosure also provides an apparatus for establishing a shared session. Since the apparatus for establishing a shared session provided by the embodiments of the disclosure corresponds to the method for establishing a shared session provided by the embodiments of FIGS. 9 to 10, the implementation of the method for establishing a shared session is also applicable to the apparatus for establishing a shared session provided by the embodiments of the disclosure, and will not be described in detail in the embodiments of the disclosure.

FIG 15 is a block diagram of an apparatus for establishing a shared session provided by an embodiment of the present disclosure. The apparatus is applied to an AMF.

As illustrated in FIG 15, the apparatus 1500 may include a transceiver unit 1501 and a processing unit 1502.

The transceiver unit 1501 is configured to: receive a protocol data unit (PDU) session establishment request from a user equipment (UE) through an access network device, in which the PDU session establishment request includes a multimodal service identifier.

The processing unit 1502 is configured to: determine a target session management function (SMF) based on the multimodal service identifier.

The transceiver unit 1501 is further configured to: send the PDU session establishment request to the target SMF.

Alternatively, the processing unit 1502 is specifically configured to: take an SMF responsible for multimodal services as the target SMF; or take an SMF to which a plurality of PDU sessions corresponding to the multimodal service identifier belong as the target SMF.

Alternatively, the transceiver unit 1501 is further configured to: receive updated quality of service (QoS) profile information and updated QoS rules information from the target SMF, and forward the QoS profile information and the updated QoS rules information to the access network device.

Alternatively, the multimodal service identifier comprises one or more of a mission identifier, a shared session identifier and a group identifier.

Alternatively, the multimodal service identifier is configured to identify a same multimodal service, or to identify a plurality of UEs sharing a PDU session.

With the apparatus for establishing a shared session according to the embodiment of the disclosure, the AMF receives the PDU session establishment request from the UE through the access network device, in which the PDU session establishment request includes the multimodal service identifier. The AMF determines the target SMF according to the multimodal service identifier, and sends the PDU session establishment request to the target SMF. The target SMF determines the corresponding PDU session according to the PDU session establishment request, binds the above PDU session with the shared N4 session corresponding to the multimodal service identifier, so that multiple PDU sessions corresponding to the multimodal service identifier share the above-mentioned shared N4 session. In this way, when multiple UEs cooperate to complete the multimode service, multiple PDU sessions can share the same shared N4 session, that is, the multiple UEs can use the same shared N4 session, which can reduce network resource consumption.

In order to implement the above embodiments, the disclosure further provides a communication device.

The communication device provided by the embodiments of the present disclosure includes a processor, a transceiver, a memory, and an executable program stored on the memory and capable of being run on the processor. When the processor runs the executable program, the processor performs the method provided in any of the above embodiments.

The communication device may be the aforementioned SMF, UE, access network device, AMF and UPF.

The processor may include various types of storage media, which may be non-transitory computer storage media, and can continue to memorize information stored thereon after the communication device is powered off. Here, the communication device includes the SMF, the UE, the access network device, the AMF and the UPF.

The processor may be connected to the memory through a bus or the like, and is configured to read the executable program stored on the memory, for example, at least one of Fig. 1 to Fig. 11.

In order to implement the above embodiments, the disclosure further provides a communication apparatus. The communication apparatus includes a processor and an interface circuit. The interface circuit is configured to receive code instructions and transmit them to the processor. The processor is configured to execute the code instructions to perform the method provided in any of the foregoing embodiments.

The communication device may be the aforementioned SMF, UE, access network device, AMF and UPF.

In order to implement the above embodiments, the disclosure further provides a computer storage medium.

The computer storage medium provided by the embodiments of the present disclosure stores an executable program. After the executable program is executed by a processor, the method in any of the foregoing embodiments can be implemented, for example, at least one of FIGs. 1 to 11.

FIG 16 is a block diagram illustrating a UE 1200 according to an embodiment of the disclosure. For example, the UE 1600 may be a mobile phone, a computer, a digital broadcast user device, a messaging sending and receiving equipment, a game console, a tablet, a medical device, a fitness device, a personal digital assistant, or the like.

As illustrated in FIG 16, the UE 1600 may include one or more of: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the UE 1600, such as the operations associated with display, telephone calls, data communications, camera operations, and recording operations. The processing component 1602 may include one or more processors 1620 to execute instructions to perform all or part of the steps in the above-described methods. Moreover, the processing component 1602 may include at least one module which facilitates the interaction between the processing component 1602 and other components. For example, the processing component 1602 may include a multimedia module to facilitate the interaction between the multimedia component 1608 and the processing component 1602.

The memory 1604 is configured to store various types of data to support the operation of the UE 1600. Examples of such data include instructions for any applications or methods operated on the UE 1600, contraction data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 is configured to provide power to various components of the UE 1600. The power component 1606 may include a power management system, one or more power sources, and any other components associated with the generation, management, and distribution of power in the UE 1600.

The multimedia component 1608 includes a screen providing an output interface between the UE 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the UE 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") for receiving an external audio signal when the UE 1600 is in an operation mode, such as a call mode, a recording mode, and a speech recognition mode. The received audio signal may be further stored in the memory 1604 or transmitted via the communication component 1616. In some embodiments, the audio component 1610 further includes a speaker to output audio signals.

The I/O interface 1612 is configured to provide an interface between the processing component 1602 and peripheral interface modules, such as a keyboard, a click wheel, buttons, and the like. The buttons may include, but be not limited to, a home button, a volume button, a starting button, and a locking button.

The sensor component 1614 includes one or more sensors for providing status assessments of various aspects of the UE 1600. For example, the sensor component 1614 may detect an open/closed status of the UE 1600, relative positioning of components, e.g., the display and the keypad of the UE 1600, a change in position of the UE 1600 or a component of the UE 1600, a presence or absence of user contraction with the UE 1600, an orientation or an acceleration/deceleration of the UE 1600, and a change in temperature of the UE 1600. The sensor component 1614 may include a proximity sensor for detecting the presence of nearby objects without any physical contact. The sensor component 1614 may also include a light sensor, such as a CMOS (complementary metal-oxide-semiconductor)) or a CCD (charge coupled device) image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the UE 1600 and other devices. The UE 1600 may access a wireless network based on a communication standard, such as Wi-Fi, 2G, or 3G, or a combination thereof. In an exemplary embodiment, the communication component 1616 receives a broadcast signal or broadcast associated information from an external broadcast management system via a broadcast channel. In an exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the UE 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any of the above methods of FIGs. 1-3.

In an exemplary embodiment, there is also provided a non-transitory computer readable storage medium including instructions, such as the memory 1604 including the instructions. The instructions may be executed by the processor 1620 in the UE 1600 for performing any of the above methods of FIGs. 1-3. For example, the non-transitory computer readable storage medium may be a ROM, a RAM, a CD-ROM, a magnetic tape, a floppy disc, an optical data storage device, and the like.

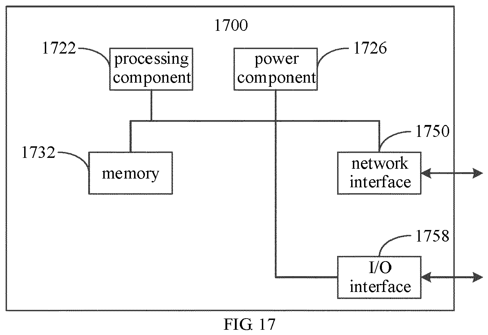

As illustrated in FIG 17, FIG. 17 illustrates a structure of a network side device according to an embodiment of the disclosure. For example, the network side device may include an access network device and a core network device. The core network device may include the SMF, the MAF, and the UPF in any of the above embodiments. Referring to FIG 17, the network side device 1700 includes a processing component 1722, further including one or more processors, and memory resources represented by a memory 1732 for storing instructions, such as application programs, executable by the processing component 1722. The application program stored in the memory 1732 may include one or more modules each corresponding to a set of instructions. In addition, the processing component 1722 is configured to execute instructions to execute any of the above methods applied to the access network device, the SMF and the AMF.

The network side device 1700 may also include a power component 1726 configured to perform power management of the network side device 1700, a wired or wireless network interface 1750 configured to connect the network side device 1700 to a network, and an input/output (I/O) interface 1758. The network side device 1700 may operate an operating system stored in the memory 1732, such as a windows server ^{™}, a Mac OS X^{™}, a Unix^{™}, a Linux^{™}, a FreeBSD^{™} or the like.

Other implementations of the disclosure may be apparent to the skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

To implement the above embodiments, embodiments of the disclosure also provide a communication apparatus. The communication apparatus may be a network side device, or may be a terminal device, or may be a chip, a chip system or a processor that supports the network side device to realize the above methods, or may be a chip, a chip system, or a processor that supports the terminal device to realize the above methods. The apparatus may be configured to implement the method described in any of the above method embodiments. For details, please refer to the description in the above method embodiments.

The communication apparatus may include one or more processors. The processor may be a general-purpose processor or a special-purpose processor, etc., such as, a baseband processor or a central processor. The baseband processor may be configured to process communication protocols and communication data. The central processor may be configured to control the communication apparatus (such as, a base station, a baseband chip, a terminal device, a terminal device chip, DU or CU, etc.), to execute the computer programs and process data in the computer programs.

Alternatively, the communication apparatus may further include one or more memories having the computer programs stored thereon. The processor is configured to execute the computer program to cause the communication apparatus to perform the method described in the above method embodiments. Alternatively, the memory may also have data stored thereon. The communication apparatus and the memory may be set separately or integrated together.

Alternatively, the communication apparatus may further include a transceiver and an antenna. The transceiver may be called a transceiver unit, a transceiver, or a transceiver circuit, etc., for implementing a transceiver function. The transceiver may include a receiver and a transmitter. The receiver may be called a receiver or a receiving circuit, etc., for implementing a receiving function. The transmitter may be called a transmitter or a transmitting circuit, etc., for implementing a transmitting function.

Alternatively, the communication apparatus may further include one or more interface circuits. The interface circuit is configured to receive code instructions and to transmit the code instructions to the processor. The processor is configured to operate the code instructions to cause the communication apparatus to perform the method described in any of the above method embodiments.

In an implementation, the processor may include a transceiver for implementing the receiving function and the transmitting function. For example, the transceiver may be a transceiver circuit, an interface, or an interface circuit. The transceiver circuit, the interface or the interface circuit for implementing the receiving function and the transceiver circuit, the interface or the interface circuit for implementing the transmitting function may be separated or integrated together. The transceiver circuit, the interface or the interface circuit may be configured to read and write codes/data, or the transceiver circuit, the interface or the interface circuit may be configured to transmit or transfer signals.

In an implementation, the processor may store a computer program, and the computer program running on the processor may cause the communication apparatus to perform the method described in any of the above method embodiments. The computer program may be solidified in the processor, in this case, the processor may be implemented by hardware.

In an implementation, the communication apparatus may include a circuit. The circuit may implement a sending, receiving or communicating function in the above method embodiments. The processor and the transceiver described in the disclosure may be implemented in an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured by various IC process technologies, such as a complementary metal oxide semiconductor (CMOS), a nMetal-Oxide-Semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be a network side device or a terminal device, but the scope for the communication apparatus described in the disclosure is not limited thereto. The communication apparatus may be a stand-alone device or may be a part of a larger device. For example, the communication apparatus may be:
(1) an independent integrated circuit IC, a chip, a chip system or a subsystem;
(2) a set with one or more ICs, alternatively, the set of ICs further including storage components for storing data and computer programs;
(3) an ASIC, such as a modem;
(4) a module that may be embedded in another device;
(5) a receiver, a terminal device, an intelligent terminal device, a cellular phone, a wireless device, a handset, a mobile unit, a vehicle-mounted device, a network-side device, a cloud device, an artificial intelligence device, etc.
(6) other devices and so on.

In the case that the communication apparatus is the chip or the chip system, the chip may include a processor and an interface. There may be one or more processors, and multiple interfaces.

Alternatively, the chip further includes a memory for storing necessary computer programs and data.

The skilled in the art may also understand that various illustrative logical blocks and steps listed in embodiments of this disclosure may be implemented by electronic hardware, computer software, or a combination of both. Whether such function is implemented by hardware or software depends on a specific application and a design requirement of the whole system. The skilled in the art may employ various methods to implement the described functions for each specific application, but the implementation should not be understood as beyond the protection scope of embodiments of the disclosure.

The disclosure also provides a readable storage medium having instructions stored thereon. The instructions are executed by a computer to implement the functions of any of the above method embodiments.

The disclosure also provides a computer program product. The computer program product is executed by a computer to implement the functions of any of the above method embodiments.

In the above embodiments, it may be implemented in whole or in part in software, hardware, firmware or any combination thereof. When implemented in software, it may be fully or partially implemented in the form of the computer program product. The computer program product includes one or more computer programs. When the computer program is loaded and executed on the computer, the flow or function according to embodiments of the disclosure is generated in whole or in part. The computer may be a general-purpose computer, a special-purpose computer, a computer network, or other programmable devices. The computer program may be stored in the computer-readable storage medium or transmitted from one computer-readable storage medium to another. For example, the computer program may be transmitted from a website, a computer, a server or a data center to another website, computer or data center in a wired (such as a coaxial cable, an optical fiber, a digital subscriber line (DSL)) or wireless (such as infrared, wireless, microwave, etc.). The computer-readable storage medium may be any available medium that the computer may store or a data storage device such as the server, the data center and the like that includes one or more available media integration. The usable medium may be a magnetic medium (e.g., a floppy disk, a hard disk, or a magnetic tape), an optical medium (e.g., a digital video disc (DVD)), or a semiconductor medium (e.g., a solid state disk (SSD)) and the like.

It may be understood by the skilled in the art that, numerical numbers such as first, second and the like involved in the disclosure are only for the convenience of description, and are not used to limit the scope of embodiments of this disclosure, but also indicate the order.

The term "at least one" in the disclosure may also be described as one or more, and the term "multiple" may be two, three, four or more, and the disclosure is not limited thereto. In embodiments of the disclosure, for a technical feature, features in the technical feature are distinguished by the terms "first", "second", "third", "A", "B", "C", "D" and the like. The features described by the terms "first", "second", "third", "A", "B", "C", "D" and the like are in no order or in no size order.

A correspondence illustrated in each table in the disclosure may be configured or predefined. A value of information in each table is only an example, and may be configured as other value, which is not limited in the disclosure. When a correspondence between a piece of information and a parameter is configured, it is not necessary that all the correspondences indicated in each table are configured. For example, a correspondence illustrated by a certain row may not be configured in the table in the disclosure. For another example, an appropriate deformation adjustment may be made based on the above table, such as splitting, merging and the like. A name of the parameter indicated by a heading in the above table may also be other name that may be understood by the communication apparatus. The value or representation of the parameter may also be other value or representation that may be understood by the communication apparatus. Other data structure may also be employed when the above table is implemented, such as an array, a queue, a container, a stack, a linear table, a pointer, a linked list, a tree, a graph, a structure, a class, a heap, a hash table, etc.

Pre-definition in the disclosure may be understood as definition, pre-definition, storage, pre-storage, pre-negotiation, pre-configuration, curing, or pre-firing.

The skilled in the art may realize that units and algorithm steps of various examples described in connection with embodiments disclosed herein may be implemented in electronic hardware, or a combination of computer software and the electronic hardware. Whether these functions are implemented in hardware or software depends on the specific application and design constraints of the technical solution. Skilled people may implement the described functions of each specific application by employing different methods, but such implementation should not be considered beyond the scope of the disclosure.

It may be clearly understood by the skilled in the art that, for the convenience and conciseness of description, specific working processes of the system, the apparatus and the unit described above may refer to the corresponding processes in the above method embodiments, which are not be repeated here.

The above is only the specific implementation of the disclosure, but the protection scope of the disclosure is not limited to this. Any technical person familiar with the technical field may easily think of changes or substitutions within the technical scope disclosed in the disclosure, which should be included in the protection scope of this disclosure. Therefore, the protection scope of the disclosure should be based on the protection scope of the claims.

## Claims

1. A method for establishing a shared session, applied to a session management function (SMF), comprising:
receiving a protocol data unit (PDU) session establishment request from a user equipment (UE) through an access network device, wherein the PDU session establishment request comprises a multimodal service identifier;
determining a corresponding PDU session based on the PDU session establishment request; and
binding the PDU session with a shared N4 session corresponding to the multimodal service identifier, so that a plurality of PDU sessions corresponding to the multimodal service identifier share the shared N4 session.

2. The method of claim 1, wherein binding the PDU session with the shared N4 session corresponding to the multimodal service identifier comprises:
sending an updated N4 context parameter corresponding to the shared N4 session to a user plane function (UPF); and
sending an updated quality of service (QoS) parameter to the UE and the access network device.

3. The method of claim 2, wherein sending the updated QoS parameter to the UE and the access network device comprises:
sending updated QoS rules information to the UE; and
sending updated QoS profile information to the access network device.

4. The method of claim 1, wherein determining the corresponding PDU session based on the PDU session establishment request comprises:
determining whether a PDU session established for the multimodal service identifier exists.

5. The method of claim 4, further comprising :
if yes, establishing a PDU session corresponding to the UE or joining the PDU session established for the multimodal service identifier.

6. The method of claim 4, further comprising:
if no, establishing the PDU session, and establishing an N4 session corresponding to the PDU session.

7. The method of claim 1, wherein the multimodal service identifier comprises one or more of a mission identifier, a shared session identifier and a group identifier.

8. The method of claim 1, wherein the multimodal service identifier is configured to identify a same multimodal service, or to identify a plurality of UEs sharing a PDU session.

9. A method for establishing a shared session, applied to a user equipment (UE), comprising:
sending a protocol data unit (PDU) session establishment request to a session management function (SMF) through an access network device, wherein the PDU session establishment request comprises a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

10. The method of claim 9, further comprising:
receiving, through the access network device, updated quality of service (QoS) rules information fed back by the SMF.

11. The method of claim 9, wherein the multimodal service identifier comprises one or more of a mission identifier, a shared session identifier and a group identifier.

12. The method of claim 9, wherein the multimodal service identifier is configured to identify a same multimodal service, or to identify a plurality of UEs sharing a PDU session.

13. A method for establishing a shared session, applied to an access network device, comprising:
receiving a protocol data unit (PDU) session establishment request from a user equipment (UE), wherein the PDU session establishment request comprises a multimodal service identifier; and
sending the PDU session establishment request to an access and mobility management function (AMF), and sending the PDU session establishment request to a session management function (SMF) through the AMF, wherein the SMF binds a PDU session corresponding to the PDU session establishment request with a shared N4 session corresponding to the multimodal service identifier, so that a plurality of PDU sessions corresponding to the multimodal service identifier share the shared N4 session.

14. The method of claim 13, further comprising:
receiving, through the AMF, updated quality of service (QoS) profile information from the SMF.

15. The method of claim 13, further comprising:
receiving, through the AMF, updated QoS rules information from the SMF; and
sending the updated QoS rules information to the UE.

16. The method of claim 13, wherein the multimodal service identifier comprises one or more of a mission identifier, a shared session identifier and a group identifier.

17. The method of claim 13, wherein the multimodal service identifier is configured to identify a same multimodal service, or to identify a plurality of UEs sharing a PDU session.

18. A method for establishing a shared session, applied to an access and mobility management function (AMF), comprising:
receiving a protocol data unit (PDU) session establishment request from a user equipment (UE) through an access network device, wherein the PDU session establishment request comprises a multimodal service identifier;
determining a target session management function (SMF) based on the multimodal service identifier; and
sending the PDU session establishment request to the target SMF.

19. The method of claim 18, wherein determining the target SMF based on the multimodal service identifier comprises:
taking an SMF responsible for multimodal services as the target SMF; or
taking an SMF to which a plurality of PDU sessions corresponding to the multimodal service identifier belong as the target SMF.

20. The method of claim 18, further comprising:
receiving updated quality of service (QoS) profile information and updated QoS rules information from the target SMF, and forwarding the QoS profile information and the updated QoS rules information to the access network device.

21. The method of claim 18, wherein the multimodal service identifier comprises one or more of a mission identifier, a shared session identifier and a group identifier.

22. The method of claim 18, wherein the multimodal service identifier is configured to identify a same multimodal service, or to identify a plurality of UEs sharing a PDU session.

23. An apparatus for establishing a shared session, applied to a session management function (SMF), comprising:
a transceiver unit, configured to receive a protocol data unit (PDU) session establishment request from a user equipment (UE) through an access network device, wherein the PDU session establishment request comprises a multimodal service identifier; and
a processing unit, configured to determine a corresponding PDU session based on the PDU session establishment request, and to bind the PDU session with a shared N4 session corresponding to the multimodal service identifier, so that a plurality of PDU sessions corresponding to the multimodal service identifier share the shared N4 session.

24. An apparatus for establishing a shared session, applied to a user equipment (UE), comprising: a transceiver unit, configured to send a protocol data unit (PDU) session establishment request to a session management function (SMF) through an access network device, wherein the PDU session establishment request comprises a multimodal service identifier, and the SMF binds a PDU session corresponding to the PDU session establishment request with a shared N4 session corresponding to the multimodal service identifier, so that a plurality of PDU sessions corresponding to the multimodal service identifier share the shared N4 session.

25. An apparatus for establishing a shared session, applied to an access network device, comprising:
a transceiver unit, configured to receive a protocol data unit (PDU) session establishment request from a user equipment (UE), wherein the PDU session establishment request comprises a multimodal service identifier;
wherein, the transceiver unit is further configured to send the PDU session establishment request to an access and mobility management function (AMF), and to send the PDU session establishment request to a session management function (SMF) through the AMF, wherein the SMF binds a PDU session corresponding to the PDU session establishment request with a shared N4 session corresponding to the multimodal service identifier, so that a plurality of PDU sessions corresponding to the multimodal service identifier share the shared N4 session.

26. An apparatus for establishing a shared session, applied to an access and mobility management function (AMF), comprising:
a transceiver unit, configured to receive a protocol data unit (PDU) session establishment request from a user equipment (UE) through an access network device, wherein the PDU session establishment request comprises a multimodal service identifier; and
a processing unit, configured to determine a target session management function (SMF) based on the multimodal service identifier;
wherein, the transceiver unit is further configured to send the PDU session establishment request to the target SMF.

27. A communication device, comprising:
a transceiver;
a memory; and
a processor, connected to the transceiver and the memory respectively, and configured to control the transceiver to receive and send wireless signals, and to implement the method for establishing a shared session according to any one of claims 1 to 8, or the method for establishing a shared session according to any one of claims 9 to 12, or method for establishing a shared session according to any one of claims 13 to 17, or the method for establishing a shared session according to any one of claims 18 to 22 by executing computer-executable instructions on the memory.

28. A communication apparatus, comprising: a processor and an interface circuit;
wherein, the interface circuit is configured to receive code instructions and transmit the code instructions to the processor;
the processor is configured to run the code instructions to execute the method for establishing a shared session according to any one of claims 1 to 8, or the method for establishing a shared session according to any one of claims 9 to 12, or method for establishing a shared session according to any one of claims 13 to 17, or the method for establishing a shared session according to any one of claims 18 to 22.

29. A computer storage medium having computer-executable instructions stored thereon, wherein, after the computer-executable instructions are executed by a processor, the method for establishing a shared session according to any one of claims 1 to 8, or the method for establishing a shared session according to any one of claims 9 to 12, or method for establishing a shared session according to any one of claims 13 to 17, or the method for establishing a shared session according to any one of claims 18 to 22 is implemented.
